# EUROPÄISCHE PATENTANMELDUNG

(11) **EP 1 443 063 A1**
(43) Veröffentlichungstag der Anmeldung: **04.08.2004**
(21) Anmeldenummer: 04450019.7
(22) Anmeldetag: 30.01.2004
(51) Int. Cl.: C08F 255/02, C08F 257/02, C08F 265/04, C08F 265/08, C08F 283/02, C08F 283/04, C23C 18/20, C25D 5/56, C23C 28/02

(54) **Neue Polymere bzw. daraus gefertigte Gegenstände, Formkörper od.dgl., Verfahren zu deren Herstellung und zur Herstellung von metallisierten Gegenständen od.dgl. daraus**

(30) Priorität: 31.01.2003 AT 1572003
(71) Anmelder: ARC Seibersdorf research GmbH, 1010 Wien (AT)
(72) Erfinder: Gruber, Heinrich F., 1190 Wien (AT); Knaus, Simone, 1100 Wien (AT); Liska, Alexander, 1180 Wien (AT); Liska, Robert, 1200 Wien (AT); Sulek, Peter, 1180 Wien (AT); Wendrinsky, Josef, 1060 Wien (AT); Sattler, Peter, 2351 Wr. Neudorf (AT)
(74) Vertreter: Wildhack, Helmut, Dipl.-Ing. Dr.

(57) **Zusammenfassung**

Die Erfindung betrifft ein neues Polymer bzw. Copolymer, welches für eine Beschichtung mit einem stabilen und haftfesten Metall-Überzug durch stromlose und/oder galvanische Abscheidung von mindestens einem Metall vorbereitet und einer solchen zugänglich gemacht ist, bzw. aus dem Polymer bzw. Copolymer durch Thermoplast-Formgebung, gefertigte Gegenstände, Formkörper u.dgl.

Das Polymer ist dadurch gekennzeichnet,
- dass es bzw. sie mit zumindest einem - einer üblichen stromlosen Metallabscheidung und/oder Galvanisierung an seiner Oberfläche nicht oder nur schwierig und unzulänglich zugänglichen Grund-(Co-)Polymerisat aus der Gruppe Polyolefine, Polyalkylene, Polystyrole, teil-chlorierte/fluorierte Polyalkylene, Polyvinylhalogenide, Polyalkyl(meth)acrylate, Polyacrylnitrile, Polyethylenterephthalate, Polyacetale, Polycarbonate und Polyamide, gebildet ist bzw. sind, wobei das Grund-(Co-)Polymerisat mit mindestens einem monomeren Maleinimid-Derivat der Formel I 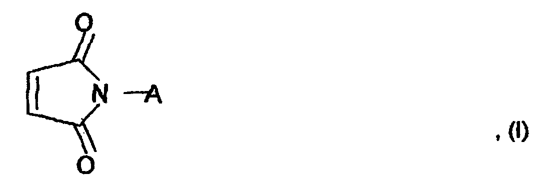 in welcher
- A mindestens einen, bevorzugt mindestens zwei, zur vorzugsweise chelat-artigen Bindung eines Metalls befähigte funktionelle Gruppen aufweisenden einwertigen Rest bedeutet, gepfropft ist.

Sie betrifft weiters Verfahren zur Herstellung der neuen Polymere bzw. Copolymere und zur Herstellung von galvanisch metall-beschichteten Gegenständen u.dgl. aus denselben, sowie die Verwendung der neuen Polymere und der monomeren Maleinimid-Derivate der Formel I.

## Beschreibung

Die vorliegende Erfindung betrifft neue Polymere bzw. Copolymere auf Basis von einer Modifizierung unterworfenen, bisher als nicht oder jedenfalls als nur schwierig und unzulänglich metallisierbar bekannten Polymeren, und hat das Ziel, eine wesentliche Verbesserung der Haftung von aus Metall-Lösungen erfolgenden Metallbeschichtungen auf der Oberfläche von aus den Polymeren gefertigten Gegenständen, Formkörpern u.dgl. zu schaffen.

Sie betrifft weiters Verfahren zur Herstellung der neuen - in einen für eine Beschichtung mit einem Metall auf üblichem Wege durch stromlose galvanische Metall-Abscheidung geeigneten Zustand gebrachten - Polymere bzw. Copolymere, ferner die Verwendung derselben sowie die Herstellung von mit einem Metall-Überzug versehenen Gegenständen, Formkörpern od.dgl., aus den neuen (Co-)Polymeren.

Es ist bekannt, dass eine große Zahl von polymeren Werkstoffen vor einem chemischen und einem nachfolgenden galvanischen Metallisieren vorbehandelt werden müssen, wozu nur beispielhaft auf "Kunststoff-Metallisierung, Handbuch für Theorie und Praxis", E.G. Leuze-Verlag, Saulgau (1991) verwiesen sein soll. Es handelt sich dabei im wesentlichen um Oberflächenbehandlungen, wie z.B. Ätzen der Polymeroberfläche mit starken Säuren, wie z.B. Chromschwefelsäure und/oder starken Oxidationsmitteln, wie z.B. Chromtrioxid-Permanganat, mehrfaches Spülen mit Wasser, Behandlung der Substratoberfläche mit einem geeigneten Aktivierungsbad, wie z.B. mit einer Palladiumsalzlösung mit anschließender chemischer Reduktion des ionogenen Palladiums. Bei diesen Vorbehandlungen sind nicht nur verhältnismäßig viele Verfahrensschritte erforderlich, sondern es werden dabei durchaus aggressive und giftige Chemikalien eingesetzt. Zudem werden bei der anschließenden Metallisierung dennoch nur bei bestimmten Substraten, wie z.B. bei ABS-Kunststoffen den tatsächlichen Anforderungen entsprechende und ausreichende Haftungen der Metallüberzüge erzielt. Gerade bei den am meisten verbreiteten und billigsten bzw. billigen Massenkunststoffen, wie z.B. Polyethylen und Polypropylen, ist die Herstellung gut haftender Metallüberzüge bis heute problematisch geblieben, wodurch ihre Anwendbarkeit für Produkte mit metallisierter Oberfläche eingeschränkt ist.

In der EP 081 129 ist ein Verfahren zur Aktivierung von Substrat-Oberflächen für eine stromlose Metallisierung beschrieben, bei dem die zu metallisierenden Oberflächen von Polymeren mit metallorganischen Verbindungen behandelt werden, welche einerseits komplex gebundene Metalle - vorzugsweise Pd(II)-Komplexe - enthalten, andererseits aber auch geeignete Liganden, die eine Affinität zu der jeweiligen Substratoberfläche haben und durch chemische Reaktion und/oder Adsorption die Haftfestigkeit der Metallüberzüge verbessern. Dadurch wird eine Art "Haftbekeimung" erzielt. Bei Polyolefinen lässt sich wegen deren unpolarer Oberfläche jedoch höchstens eine unbedeutende Verbesserung der Haftfestigkeit von auf dieselben aufgebrachten Metall-Überzügen erreichen, da die hiefür eingesetzten Pd-Komplexe mit langkettigen Alkylresten lediglich durch schwache Wechselwirkungskräfte an sie gebunden sind.

In der DE 43 32 734 A1 und in der DE 43 33 670 A1 sind mit Monomaleimiden gepfropfte Propylencopolymerisate offenbart, worin neben N-Alkyl- und N-Arylmaleinimiden auch Maleinimide mit funktionellen Gruppen wie Carboxyl- bzw. Aminogruppen als Pfropfungs-Reste beansprucht sind und welche gute mechanische Eigenschaften aufweisen. Weiters wird in der Beschreibung dieser DE-A1 auch eine gute Haftung dieser Pfropfcopolymere auf polaren Substanzen wie Glas oder Metallen erwähnt, jedoch wird dieselbe durch kein konkretes Beispiel, welches die Art der Herstellung des Verbundes zwischen Polymer und Metall erläutert, belegt. Es kann zwar angenommen werden, dass speziell bei Pfropfcopolymerisaten mit polaren funktionellen Maleinimiden, wie bspw. 4-Maleinimidobenzoesäure, eine geringfügige Verbesserung der Haftung erreicht wird, jedoch ist diese für praktische Anwendungen in keiner Weise ausreichend, da die Wechselwirkungen der dort in Rede stehenden, nur monofunktionellen Ankergruppen mit den Metallatomen zu schwach sind, wie später auch in den Vergleichsbeispielen der vorliegenden Erfindung gezeigt ist.

Weiters soll auf die DE 31 23 946 A1 hingewiesen sein, in welcher ein für die stromlose Metallisierung geeigneter Kunststoffgegenstand beschrieben ist, bei dem auf einem Kunststoffsubstrat ein zumindest halbgehärtetes Produkt einer härtbaren Harzmasse aus einem Gemisch und/oder aus einem Vorreaktionsprodukt von (a) mindestens einer Cyanatverbindung in Form eines polyfunktionellen Cyanatesters, eines Vorpolymerisats des Cyanatesters, eines Co-Vorpolymerisats des Cyanatesters und eines Amins sowie von Gemischen davon und (b) mindestens einem Kautschuk vom Dien-Typ ausgebildet ist. Die dort beschriebene aufwendige Mischung wird gemäß dieser DE-A1 auf ein geformtes Substrat, konkret genannt sind Glasfasergewebe, Epoxidharzprepregs und Polyphenylensulfidharz, aufgetragen und dort gehärtet. Aus den konkreten Beispielen dieser Schrift geht hervor, dass vor der stromlosen Metallisierung der so erhaltenen Polymere dennoch eine Vorbehandlung mit Chromtrioxid und Schwefelsäure, in der bisher üblichen Weise, wie sie schon oben erläutert ist, vorgenommen wird.

Aus der JP 02 284 941 A ist ein für eine Modifizierung bzw. Ausgestaltung der Oberfläche, wie durch Beschichten, Plattieren oder Bedampfen, geeignetes Polymer auf Basis eines bloß pysikalischen Gemisches bzw. Blends aus einem Polypropylen-Harz, einem Co-Polymer-Harz auf Maleinimid-Basis und einem anorganischen Füllstoff bekannt geworden. Das dort beschriebene Polymer wird durch Mischung eines Propylen-Ethylen-Copolymeren mit einem Harz auf Basis eines Maleinimid-Vinyl-Copolymeren erhalten. Der dort angegebene Hauptzweck der Zumischung des Maleinimid-Copolymeren liegt in der Erhöhung der Temperaturbeständigkeit des dort beschriebenen Polymer-Blends.

Auch die EP 370 264 A1 betrifft eine hitze- und schlagfeste Harz-Komposition, also ebenfalls ein Blend, aus einem Maleinimid-Copolymer, einem gummi-verstärkten Harz und weiters einem rigiden Thermoplast-Harz, wobei auch hier die Hitzefestigkeit auf das in das Maleinimid-Copolymer in dessen Kette eingebaute Maleinimid zurückzuführen ist. Es ist in dieser EP-A1 darauf hingewiesen, dass die dort beschriebene Harz-Komposition sich für die verschiedensten Arten der Verarbeitung eignet und es ist lapidar erwähnt, dass daraus hergestellte Objekte mittels Plattierung, Vakuum-Bedampfung und Sputtern mit einem glänzenden Überzug versehen werden können. Irgendwelche nähere Angaben über die Art des Plattierens und über die Qualität und Haltbarkeit einer Plattierung sind dort nicht enthalten. Eigene Untersuchungen an einem derartigen Kunstharz haben gezeigt, dass zwar eine galvanische Abscheidung eines Metalls, wie z.B. Kupfer, auf demselben möglich ist, dass aber sowohl der Glanz der Beschichtung als auch deren Haftung mangelhaft ist.

Die Erfindung hat sich die Aufgabe gestellt, neue modifizierte Polymere sowie ein neues, das Substrat schonendes und verfahrenstechnisch einfaches Verfahren zur Herstellung dieser modifzierten Polymere zu schaffen, welches es ermöglicht, auch bisher nicht, schwierig oder jedenfalls unzulänglich metallisierbare Substrate, wie insbesondere ein Polyolefin-Grundgerüst aufweisende Polymere durch stromlose und/oder galvanische Abscheidung mit einem gut haftenden und dauerhaften Metallüberzug zu versehen, wobei ein vorheriges Ätzen oder eine andere, für solche Fälle übliche Vorbehandlung von deren Oberfläche bevorzugterweise gänzlich vermieden werden soll.

Diese Aufgabe lässt sich, wie gefunden wurde, dadurch lösen, dass die in Rede stehenden, als praktisch nicht oder als besonders schwierig metallisierbar bekannten Polymere durch Pfropfung mit bestimmten Maleinimid- Derivaten modifiziert werden, welche zwei oder mehrere salz- bzw. komplexbildende Liganden für eine die Fähigkeit zur Bindung von Metallen wesentlich erhöhende Wechselwirkung mit Metallen aufweisen.

Gegenstand der vorliegenden Erfindung ist bzw. sind somit ein neues modifiziertes Polymer bzw. Copolymer, insbesondere ein solches, welches einer Beschichtung mit einem haftfesten Metall-Überzug durch stromlose und/oder galvanische Abscheidung eines Metalles zugänglich gemacht ist, bzw. aus dem genannten Polymer bzw. Copolymer, bevorzugt durch Thermoplast-Formgebung, gefertigte Gegenstände, Formkörper, Halbzeuge, Profile, Platten, Bleche, Folien, Bänder, Fasern, Granulate od.dgl.

Der Gegenstand der Erfindung ist durch den kennzeichnenden Teil des **Anspruches 1** definiert.

An die beschriebenen -ohne vorherige Oberflächen-Aufschließung mit aggressiven, hochreaktiven Chemikalien - einer stromlosen und/oder galvanischen Metallabscheidung bisher praktisch nicht oder nur höchst unzulänglich zugänglichen Grund-Polymerisate sind als Folge der radikalischen Pfropfung die gemäß Anspruch 1 eingesetzten funktionellen Maleinimid- Derivate der allgemeinen Formel (1) kovalent gebunden und stellen sozusagen aus der Oberfläche der bisher nicht oder nur schwierig zu metallisierenden Polymeren herausragende Reste dar, welche durch ihre funktionellen Gruppen zu einer Chelat- oder chelatartigen und daher sehr stabilen Bindung von Metallen befähigt sind.

Die neuen, mit den zumindest mono-funktionellen und vorzugsweise mehrfunktionellen, Maleinimid- Derivaten der allgemeinen Formel (I) durch Pfropfen modifizierten Polymere ermöglichen auf Grund der ionischen und/oder koordinativen Wechselwirkung der genannten funktionellen Gruppen mit Metallen auf einfache Weise die Herstellung tatsächlich ausgezeichnet haftender Metallüberzüge, ohne dass eine Vorbehandlung mit giftigen oder ätzenden Chemikalien zur Bildung von zur Bindung befähigten Gruppen an deren Oberfläche nötig wären.

Es soll an dieser Stelle ausdrücklich darauf verwiesen werden, dass die Maleinimid-Derivate der im Anspruch 1 genannten allgemeinen Formel (1) nicht durch CoPolymerisation oder Co-Kondensation von die jeweilige Basis-Polymer-Kette oder -Struktur bildenden Monomeren mit mindestens einem Maleinimid-Derivat der in den Ansprüchen genannten Formeln gebildet sind, dass sie also nicht in die Kette oder Struktur eines aus den genannten Monomeren durch Polymerisation, Polykondensation od.dgl. gebildeten Polymers eingebaut, also nicht Bestandteil der Kette selbst sind.

Vielmehr liegt bei den neuen Pfropf-Copolymeren zu Beginn ein schon durch vorherige Polymerisation, Polykondensation od.dgl. erhaltenes Polymer vor, und auf dieses wird zumindest eines der als Monomer vorliegenden Maleinimid-Derivate der in den Ansprüchen genannten Formeln (I) bzw. (I/1 bis l/4) aufgepfropft. So sitzen bei einem erfindungsgemäßen gepfropften Polymer auf einem Polymer-Molekül, je nach eingesetzter Menge Maleinimid-Derivat z.B. etwa 10 bis 100 von ihm wegragende Maleinimid-Derivat-Reste mit Chelatgruppen.

Es besteht also zwischen den erfindungsgemäßen, durch Pfropfen mit einem Maleinimid-Derivat-Monomer modifizierten Polymeren und den Polymeren-Gemischen bzw. -Blends gemäß EP 370 264 A1 und JP 02 284 941 A, welche Co-Polymerisate offenbaren, in deren Grund-Polymerketten Maleinimide einpolymerisiert, also schon im Zuge der Herstellung der Polymere "eingebaut" sind, ein ganz wesentlicher Unterschied.

Dieser Unterschied manifestiert sich letztlich in einer wesentlich verbesserten Eignung der erfindungsgemäßen maleinimid-gepfropften Polymere zur Metallisierung mittels stromloser und/oder galvanischer Metall-Abscheidung, wodurch eine bisher erreichte Qualität von metallisierten Gegenständen aus nicht- oder nur gering-polaren Kunststoffen ermöglicht ist.

Was die Menge der in das jeweilige Grundpolymerisat einpolymerisierten Maleinimid- Derivate betrifft, so sind - siehe dazu den **Anspruch 2** - 0,25 bis 4,0 Gew-Teile pro 100 Gew-Teile Grundpolymerisat bevorzugt.

Im Rahmen der Erfindung besonders bevorzugt sind metall-beschichtbare Coplymere gemäß **Anspruch 3** , welche aus den im Anspruch 1 genannten verschiedenen Grund-Polymerisaten mit den auf dieselben pfropf-copolymerisierten Maleinimid-Derivaten der dort genannten Formeln I/1, l/2, l/3 und/oder I/4 gebildet sind.

Einen weiteren wesentlichen Gegenstand der Erfindung bildet, wie schon eingangs erwähnt, ein neues Verfahren zur Herstellung der neuen, für die Metall-Abscheidung modifizierten Polymere, wie es dem **Anspruch 4** zu entnehmen ist.

Besonders hohen Ansprüchen bezüglich der Haftfestigkeit von Metallen auf den Kunststoffen werden Copolymerisate gerecht, welche gemäß dem **Anspruch 5** hergestellt sind und in welche zumindest eines der oben schon erwähnten, im Anspruch 3 im einzelnen genannten Maleinimid-Derivate der Formeln (I/1, I/2, I/3 und/oder I/4) einpolymerisiert sind.

Überraschend gute Ergebnisse im Sinne der Zielsetzung der vorliegenden Erfindung lassen sich bei Einhaltung der im **Anspruch 6** angegebenen Verfahrensparameter erreichen.

Im soeben genannten Sinn ist einer günstigen Verfahrensführung unter Einsatz der im **Anspruch 7** genannten Mengenverhältnisse von Grund-(Co-)Polymerisat, Maleinimid- Derivat und Reaktions-Initiator bzw. -Beschleuniger zueinander der Vorzug zu geben.

Günstig ist weiters der Einsatz der im **Anspruch 8** genannten Radikalstarter.

Weiters bildet - als aktuelle Konsequenz der neuen maleinimidderivat-modifizierten, und dadurch einer problemlosen Abscheidung eines haft-stabilen Metallfilms, -überzugs od.dgl. in überraschender Weise zugänglich gemachten (Co-)Polymere und der erfindungsgemäß vorgesehenen Herstellung derselben - einen weiteren wichtigen Gegenstand der vorliegenden Erfindung ein neues Verfahren zur Herstellung von neuen mit einem Metall haftfest oberflächen-beschichteten Gegenständen, Formkörpern, Profilen, Folien, Bändern, Fasern, Granulaten od.dgl., aus einem solchen (Co-)Polymer, wobei eine stromlose dünne Erst-Beschichtung mit einem Metall und danach zumindest eine galvanotechnische Beschichtung mit dem gleichen oder mit einem anderen Metall vorgenommen wird, welches in seinen Einzelheiten im **Anspruch 9** geoffenbart ist.

Einen weiteren Gegenstand der Erfindung bildet die Verwendung der neuen maleinimidderivat-gepfropften (Co-)Polymere für die Herstellung metallisierter Objekte, wie dem **Anspruch 10** zu entnehmen.

Schließlich besteht ein weiterer Gegenstand der Erfindung in der Verwendung der Maleinimid-Derivat-Monomere für die Pfropfung auf die, wie oben ausführlich beschriebenen, bisher sich einer ordnungsgemäßen Metallisierung widersetzenden Polymere und Polykondensate.

Die folgenden Beispiele illustrieren in den Herstellungsbeispielen 1 bis 5 die erfindungsgemäße Herstellung der neuen, einer Metallisierung nun zugänglich gemachten, mit Maleinimid-Derivaten gepfropften Polymerisate, in den Vergleichsbeispielen A und B die Herstellung von nicht durch Pfropfen mit Maleinimid- Verbindungen modifizierten Polymerisaten und in den Anwendungsbeispielen 1 und 2 den Vorgang der Metallisierung der neuen durch Maleinimid-Pfropfung modifizierten Polymere sowie die dabei erzielten Ergebnisse.

Beispiele für die Herstellung von für die Pfropfung bevorzugt verwendbaren Malein-Derivat-Monomeren und von jeweils mit denselben gepfropften Polymeren:

### Herstellungs-Beispiel 1:

### a) Herstellung von N-(4-Maleimidobenzoyl)-nitrilo-diessigsäure

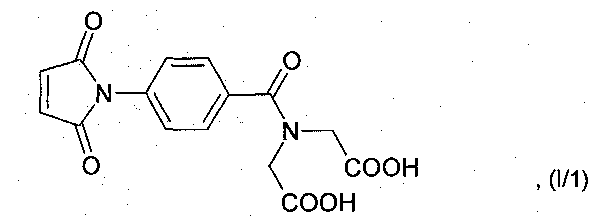

| | | |
|---|---|---|
| Ansatz | Maleimidobenzoesäurechlorid | 10.00g (42.5 mMol) |
| | Iminodiessigsäure | 34.0g (255 mMol) |
| | Triethylamin | 35.4g (340 mMol) |
| | Dioxan | 240ml |
| | Wasser | 480ml |

Maleimidobenzoesäurechlorid, wird durch Erwärmen in Dioxan gelöst und am Eisbad auf 0°C gekühlt. Dann wird eine Lösung Iminodiessigsäure in Wasser und Triethylamin langsam zugetropft. Dabei bildet sich ein farbloser Niederschlag. Die Suspension wird durch Entfernen des Eisbads auf Raumtemperatur gewärmt und noch weitere zwei Stunden bei dieser Temperatur gerührt. Dabei bildet sich eine gelbe Lösung.

Das Dioxan wird abdestilliert und pH3 mit 2n Salzsäure eingestellt, dann dreimal mit jeweils 30 ml Ethylacetat extrahiert. Es wird über Natriumsulfat getrocknet, filtriert und das Lösungsmittel im Vakuum abdestilliert.

Das Rohprodukt wird zur Reinigung in wenig Dioxan (5ml) gelöst und die Lösung mit Diethylether versetzt. Das dabei ausgefallene Nebenprodukt wird abfiltriert, das Lösungsmittel im Vakuum abdestilliert und die hellgelben Kristalle in Diethylether digeriert., abfiltriert und im Vakuum getrocknet.

Ausbeute: 8,80 g (65% d. Th.); hellgelbe Kristalle

### b) Pfropfcopolymerisation von N-(4-Maleimidobenzoyl)-nitrilo-diessigsäure auf Polypropylen

100 Gew.-Teile Polypropylen (Fa. Borealis AG) werden in einem Einschneckenextruder (Rheocord 90 der Firma Haake) mit N-(4-Maleimidobenzoyl)-nitrilodiessigsäure in Gegenwart von 2,5-Dimethyl-2,5-bis-(tert.-butylperoxy)-hex-(3)-in (®Luperox 130) als Initiator zur Reaktion gebracht. Die Umsetzung wird bei einer Temperatur von 200°C und einer durchschnittlichen Verweilzeit von 45 bis 90 Sekunden durchgeführt. Die jeweiligen Mengen des verwendeten 4-Maleimidobenzoyl-nitrilodiessigsäure-Monomers und des Radikalstarters sind in der Tabelle 1 aufgeführt.

Die dabei erhaltenen gepfropften Polypropylene sind geruchlos und in Abhängigkeit von der aufgepfropften Menge Maleinimid-Derivat-Monomer farblos bis leicht rosa und weisen gegenüber dem eingesetzten Polypropylen nahezu unveränderte Fließfähigkeit auf. Die derart gepfropften Polypropylene werden anschließend in o-Dichlorbenzol gelöst und durch Zugabe von n-Hexan wieder ausgefällt. Die Pfropfausbeute wurde durch Infrarotspektroskopie bestimmt.

**Tabelle 1**

| 4-Maleimidobenzoyl-nitrilodiessigsäure [Gew.-Teile] | ® Luperox 130 [Gew.-Teile] | Pfropfausbeute [%] |
|---|---|---|
| 0,25 | 0,5 | 92 |
| 0,5 | 0,5 | 87 |
| 1 | 0,5 | 83 |
| 2 | 0,5 | 78 |

### Herstellungs-Beispiel 2:

### a) Herstellung von N-(11-Maleinimidoundecanoyl)-asparaginsäure

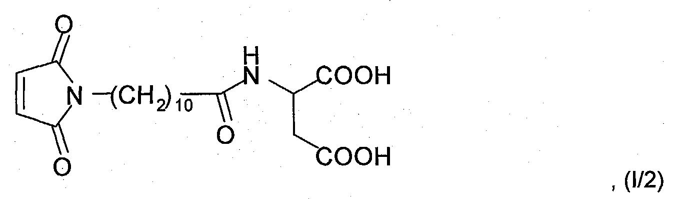

| | | |
|---|---|---|
| Ansatz | Maleimidoundecansäure | 2.00g (7.04mMol) |
| | Dicyclohexylcarbodiimid | 1.60g (7.74mMol) |
| | N-Hydroxysuccinimid | 0.89g (7.74mMol) |
| | Asparaginsäure | 0.94g (7.04mMol) |
| | Triethylamin | 1.44g (14.12mMol) |
| | Wasser | 8ml |
| | Dioxan | 23ml |

Maleimidoundecansäure, Dicyclohexylcarbodiimid und N-Hydroxysuccinimid werden in destilliertem Dioxan gelöst und 30 Minuten bei Raumtemperatur gerührt, wobei sich ein farbloser Niederschlag bildet. Die Suspension wird mit einem Eisbad auf 0°C abgekühlt und langsam eine Lösung von Asparaginsäure in Wasser und Triethylamin zugetropft.

Dann wird über Nacht gerührt, filtriert, der Filterkuchen gründlich mit Wasser gewaschen und aus dem Filtrat das Dioxan abdestilliert. Der Rückstand wird in Wasser und Ethylacetat (1:1) aufgenommen und die organische Phase verworfen.

Die wässerige Phase wird noch einmal mit Ethylacetat gewaschen, dann mit 2n HCl auf pH3 eingestellt, wobei das Produkt ausölt. Man extrahiert dreimal mit 50 ml Ethylacetat, trocknet über Natriumsulfat, filtriert und destilliert das Lösungsmittel ab. Das ölige Rohprodukt wird säulenchromatographisch (35fache Menge Kieselgel) mit einem Gemisch aus Toluol, Methanol und Eisessig (40:5:2) gereinigt. Man erhält ein hellgelbes Öl, das in kaltem Petrolether zur Kristallisation gebracht werden kann.

Ausbeute: 1.61 g (62% d. Th.); hellbeige Kristalle

### b) Pfropfcopolymerisation von N-(11-Maleinimidoundecanoyl)-asparaginsäure auf Polypropylen

100 Gew.-Teile Polypropylen werden unter den gleichen Bedingungen wie in Beispiel 1 beschrieben mit den entsprechenden Mengen N-(11-Maleinimidoundecanoyl)-asparaginsäure (vgl. Tabelle 2) umgesetzt.

Die dabei erhaltenen gepfropften Polypropylene sind geruchlos und in Abhängigkeit von der aufgepfropften Menge Maleinimid-Derivat-Monomer farblos bis leicht rosa und weisen gegenüber dem eingesetzten Polypropylen nahezu unveränderte Fließfähigkeit auf. Die in der beschriebenen Weise gepfropften Polypropylene werden analog zum Herstellungs-Beispiel 1 aufgearbeitet und charakterisiert.

**Tabelle 2**

| N-(11-Maleinimidoundecanoyl)-asparaginsäure [Gew.-Teile] | ® Luperox 130 [Gew.-Teile] | Pfropfausbeute [%] |
|---|---|---|
| 0,25 | 0,5 | 95 |
| 0,5 | 0,5 | 94 |
| 1 | 0,5 | 91 |
| 2 | 0,5 | 84 |
| 4 | 0,5 | 79 |

### Herstellungs-Beispiel 3:

### a) Herstellung von N-(11-Maleinimidoundecanoyl)- 5-aminophenanthrolin

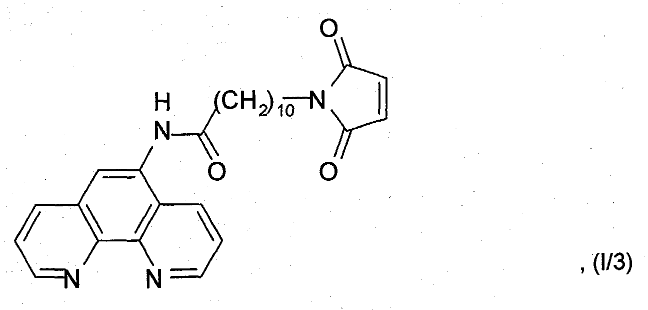

| | | |
|---|---|---|
| Ansatz | Maleimidoundecansäurechlorid | 9.07g (30 mMol) |
| | 5-Amino-o-phenanthrolin | 6.03g (30 mMol) |
| | Triethylamin | 8.85g (85 mMol) |
| | Dioxan | 120ml |

Maleimidoundecansäurechlorid wird in wasserfreiem Dioxan gelöst und unter Eiskühlung 5-Amino-o-phenanthrolin und Triethylamin gelöst in wasserfreiem Dioxan langsam zugetropft. Nach kurzer Zeit bildet sich ein weißer Niederschlag aus Triethylaminhydrochlorid. Die Suspension wird über Nacht bei Raumtemperatur gerührt, der gebildete Niederschlag abfiltriert und die Lösung im Vakuum eingedampft. Das braune Öl wird in 100 ml 2 N HCl aufgenommen und 2 mal mit je 50 ml Ethylacetat extrahiert. Die wäßrige Phase wird vorsichtig mit 1 N NaOH auf pH 8 gestellt und mit Ethylacetat extrahiert. Die organische Phase wird über Natriumsulfat getrocknet, filtriert und eingedampft. 9,52 g (68%)

Ausbeute: 9,52 g (68% d. Th.); hellbraunes Öl

### b) Pfropfcopolymerisation von N-(11-Maleinimidoundecanoyl)- 5-aminophenanthrolin auf Polypropylen

100 Gew.-Teile Polypropylen werden unter den gleichen Bedingungen wie in Beispiel 1 beschrieben mit den entsprechenden Mengen N-(11-Maleinimidoundecanoyl)-5-aminophenanthrolin (vgl. Tabelle 3) umgesetzt.

Die dabei erhaltenen gepfropften Polypropylene sind geruchlos und in Abhängigkeit von der aufgepfropften Menge Maleinimid-Derivat-Monomer farblos bis rosa und weisen gegenüber dem eingesetzten Polypropylen nahezu unveränderte Fließfähigkeit auf. Die in der beschriebenen Weise gepfropften Polypropylene werden analog zum Herstellungs-Beispiel 1 aufgearbeitet und charakterisiert.

**Tabelle 3**

| N-(11-Maleinimidoundecanoyl)- 5-aminophenanthrolin [Gew.-Teile] | ® Luperox 130 [Gew.-Teile] | Pfropfausbeute [%] |
|---|---|---|
| 0,25 | 0,5 | 91 |
| 0,5 | 0,5 | 86 |
| 1 | 0,5 | 81 |
| 2 | 0,5 | 76 |
| 4 | 0,5 | 72 |

### Herstellungs-Beispiel 4:

### a1) Herstellung von 3-(11-Hydroxy-undecyl)pentan-2,4-dion

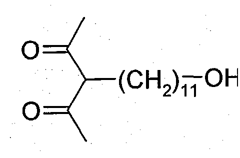

| | | |
|---|---|---|
| Ansatz | 11 -Brom-undecan-1 -ol | 20.0g (79,6mmol) |
| | 2,4-Pentandion | 18.4g (184mmol) |
| | Kaliumcarbonat | 23.3g (168mmol) |
| | Kaliumiodid | 2.56g (20mmol) |
| | Aceton (abs.) | 250 ml |

In einem 500 ml Dreihalskolben wird unter N₂-Atmosphäre eine Suspension von Kaliumcarbonat, Kaliumiodid und 11-Bromundecan-1-ol in abs. Aceton hergestellt. Zu dieser Mischung wird das 2,4-Pentandion zugetropft und die Suspension für sechs Stunden auf Rückfluss gekocht. Anschließend wurde die Reaktionsmischung am Rotationsverdampfer auf ca. 50 ml eingeengt und auf 2N Salzsäure gegossen. Die so erhaltene Lösung wird in einem Scheidetrichter drei Mal mit Diethylether extrahiert und die vereinigten organischen Phasen werden zwei Mal mit Wasser gewaschen. Die organische Phase wird über Natriumsulfat getrocknet und am Rotationsverdampfer vollständig eingedampft. Das so erhaltene gelbe Öl wird durch Kristallisation aus PE gereinigt.

Ausbeute: 11.4 g (53 % d. Th.); weißer kristalliner Feststoff

### a2) Herstellung von (2,5-Dioxo-2,5-dihydro-pyrrol-1-yl)-essigsäure 12-acetyl-13-oxotetradecyl ester

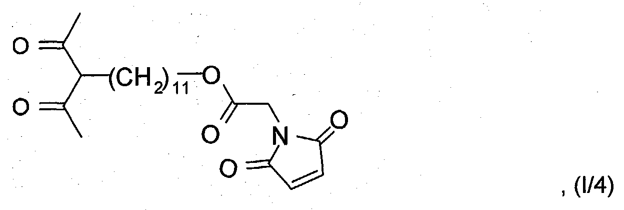

| | | |
|---|---|---|
| Ansatz | 3-(11-Hydroxy-undecyl)-pentan-2,4-dion | 1.0g (3.7 mmol) |
| | Maleimidoessigsäurechlorid | 1.3g (7.4 mmol) |
| | Pyridin | 4ml |
| | Diethylether | 26ml |

In einem 250 ml Dreihalskolben wird unter N₂-Atmosphäre der Alkohol in dem Gemisch aus Diethylether und Pyridin vorgelegt. Die Reaktionsmischung wird nun auf 0°C gekühlt und anschließend das Maleimidoessigsäurechlorid zu dieser Reaktionslösung über den Zeitraum von zwei Stunden zugetropft. Anschließend wurde die Reaktionslösung für 12 Stunden bei Raumtemperatur gerührt. Nach vollständiger Umsetzung des Alkohols wird die Reaktionsmischung zwei Mal mit 2N Salzsäure und anschließend drei Mal mit gesättigter Natriumhydrogencarbonatlösung ausgeschüttelt. Die organische Phase wird nun mit Natriumsulfat getrocknet und das Lösungsmittel am Rotationsverdampfer abgezogen.

Ausbeute: 1.3 g (85 % d. Th.); hellgelber Feststoff

### b) Pfropfcopolymerisation von (2,5-Dioxo-2,5-dihydro-pyrrol-1-yl)-essigsäure 12-acetyl-13-oxo-tetradecyl ester mit Polypropylen

100 Gew.-Teile Polypropylen werden unter den gleichen Bedingungen wie in Beispiel 1 beschrieben mit den entsprechenden Mengen (2,5-Dioxo-2,5-dihydro-pyrrol-1-yl)-essigsäure 12-acetyl-13-oxo-tetradecyl ester (vgl. Tabelle 4) umgesetzt.

Die dabei erhaltenen gepfropften Polypropylene sind geruchlos und in Abhängigkeit von der aufgepfropften Menge Monomer farblos bis rosa und weisen gegenüber dem eingesetzten Polypropylen nahezu unveränderte Fließfähigkeit auf. Die gepfropften Polypropylene werden analog zum Herstellungs-Beispiel 1 aufgearbeitet und charakterisiert.

**Tabelle 4**

| (2,5-Dioxo-2,5-dihydro-pyrrol-1-yl)-essigsäure 12-acetyl-13-oxo-tetradecyl ester [Gew.-Teile] | ® Luperox 130 [Gew.-Teile] | Pfropfausbeute [%] |
|---|---|---|
| 0,25 | 0,5 | 97 |
| 0,5 | 0,5 | 90 |
| 1 | 0,5 | 87 |
| 2 | 0,5 | 83 |
| 4 | 0,5 | 80 |

### Vergleichsbeispiel A

100 Gew.-Teile des in Beispiel 1 eingesetzten Polypropylens werden unte analogen Bedingungen mit N-Phenylmaleimid gepfropft (vgl. Tabelle A). Die gepfropfter Polypropylene werden analog zum Herstellungs-Beispiel 1 aufgearbeitet und charakterisiert.

**Tabelle A**

| N-Phenylmaleimid [Gew.-Teile] | ® Luperox 130 [Gew.-Teile] | Pfropfausbeute [%] |
|---|---|---|
| 0,5 | 0,5 | 96 |
| 1 | 0,5 | 94 |
| 2 | 0,5 | 88 |
| 4 | 0,5 | 80 |

### Vergleichsbeispiel B

100 Gew.-Teile des in Beispiel 1 eingesetzten Polypropylens werden unter analogen Bedingungen mit 4-Maleimidobenzoesäure umgesetzt (vgl. Tabelle B). Die gepfropften Polypropylene werden analog zum Herstellungs-Beispiel 1 aufgearbeitet und charakterisiert.

**Tabelle B**

| 4-Maleimidobenzoesäure [Gew.-Teile] | ® Luperox 130 [Gew.-Teile] | Pfropfausbeute [%] |
|---|---|---|
| 0,5 | 0,5 | 92 |
| 1 | 0,5 | 90 |
| 2 | 0,5 | 72 |
| 4 | 0,5 | 68 |

### Anwendungs-Beispiel 1:

### Metallisierung der Polymerisate:

Die, wie in den Herstellungs-Beispielen beschrieben, gepfropften Propylenpolymerisate wurden ohne vorangehende chemische Oberflächenvorbehandlung nach einem bspw. für ABS-Kunststoffe bekannten Verfahren (DBP1197720) metallisiert. Die Palladiumbekeimung erfolgte bei 35°C innerhalb von 10 min, die Reduktion zu metallischem Palladium bei 35°C innerhalb von 3 min.

Die anschließende chemische Nickelabscheidung erfolgte bei 65°C innerhalb von 15 min. Danach wurde bei 20°C innerhalb von 30 min verkupfert, wobei Schichtdicken im Bereich von 25 bis 30 µm erhalten wurden.

Als Nutzschicht kann dann z.B. Kupfer, Nickel oder Gold aufgebracht werden.

### Prüfung der Haftung der Metallbeschichtungen:

Die Haftung einer Kupferbeschichtung auf den nach den bzw. analog zu den Herstellungs-Beispielen 1 bis 4 und den Vergleichs-Beispielen A und B hergestellten Pfropf-(Co-)Polymeren, sowie auf dem unbehandelten Polypropylen wurde mittels Gitterschnitt-Test (DIN EN ISO 2409) geprüft. Die Ergebnisse sind in der Tabelle 5 zusammengefasst:

**Tabellle 5**

| (Co-)Polymer gemäß | Gitterschnitt |
|---|---|
| Herstellungs-Beispiel 1 | 1 |
| Herstellungs-Beispiel 2 | 1 |
| Herstellungs-Beispiel 3 | 0 |
| Herstellungs-Beispiel 4 | 0 |
| Vergleichs-Beispiel A | * |
| Vergleichs-Beispiel B | 4 |
| Unbehandeltes Polypropylen | * |

| | |
|---|---|
| * Metallisierung nicht möglich bzw. Metallschicht nicht wischfest. | |

Aus dem Vergleich zwischen den erfindungsgemäßen Herstellungs-Beispielen 1 bis 5 und den Vergleichs-Beispielen A und B ist zu erkennen, dass bei den mit dem bzw. mit der keine bzw. nur wenig funktionelle Gruppen aufweisenden N-Phenylmaleinimid bzw. 4-Maleimidobenzoesäure gepfropften Polypropylenen gemäß den Vergleichsbeispielen A und B keine bzw. nur eine äußerst geringe Haftung im Vergleich zu den mit den erfindungsgemäß einzusetzenden, die Chelatbildung begünstigenden Maleinimid-Verbindungen der allgemeinen Formel I gepfropften Polymer-Proben gemäß den Herstellungs-Beispielen 1 bis 4 erzielt wird.

### Anwendungs-Beispiel 2:

Unter Einhaltung der in der Kunststofftechnik üblichen Verfahrensparameter wurden Polyethylen, Polyethylenterephthalat, Polystyren, Polymethylmethacrylat, Polyamid 6/6, Polycarbonat, Polyacrylnitril durch Pfropf-Copolymerisation in der Hitze jeweils mit den in den Herstellungs-Beispielen 1 bis 4 genannten Maleinimid-Derivaten modifiziert. Die Verarbeitung erfolgte jeweils unter Zusatz von Luperox 130 als Initiator, wobei die Verweilzeit und die Massetemperatur im Extruder bzw. in der Spritzgussmaschine so aufeinander abgestimmt waren, dass mindestens 90 % des Peroxids zerfielen. Die Zusatzmengen an Maleinimid-Verbindung betrug in allen Fällen 2 Gew-% und jene an Peroxid-Initiator 0,5 Gew-%, jeweils bezogen auf 100 Gew-% (Co-)Polymer.

Mittels eines Extruders (Rheocord 90/Haake) wurden Bänder mit der Dimension 60x1 mm und mittels einer üblichen Spritzgussmaschine wurden normgemäße Schulterstab-Probekörper produziert.

Danach erfolgte die Metallabscheidung wie im Anwendungs-Beispiel 1 beschrieben.

Die Haftfestigkeit der Metallisierungsschicht wurde mit einem Gitterschnittgerät, PEG-Universal, Typ 3410 (BYK Gardner) geprüft, die Ergebnisse dieser Prüfung sind in der Tabelle 6 zusammengefasst.

**Tabelle 6:**

| Modifikation gemäß: | pp* | PE* | PET* | PS | PMMA | PA | PC | PAN |
|---|---|---|---|---|---|---|---|---|
| Herstellungs-Beispiel 1 | 2 | 2 | 1 | 1 | 2 | 1 | 0 | 1 |
| Herstellungs-Beispiel 2 | 1 | 2 | 1 | 1 | 0 | 0 | 1 | 1 |
| Herstellungs-Beispiel 3 | 1 | 1 | 0 | 0 | 0 | 0 | 0 | 0 |
| Herstellungs-Beispiel 4 | 2 | 0 | 1 | 1 | 0 | 0 | 0 | 1 |
| Vergleichs-Beispiel 1 | - | - | 5 | 5 | 4 | 4 | 4 | 5 |
| Vergleichs-Beispiel 2 | 5 | 5 | 3 | 3 | 4 | 3 | 4 | 4 |
| unbehandelt | - | - | 5 | 5 | 5 | 4 | * | 5 |
| Anmerkungen: - keine Metallabscheidung möglich PP: Polypropylen PE: Polyethylen PET: Polyethylenterephthalat PS: Polystyren PA: Polyamid-6,6 PC: Polycarbonat PAN: Polyacrylnitril | | | | | | | | |

| | | | | | | | | |
|---|---|---|---|---|---|---|---|---|
| *: extrusionsgefertigte Proben (restl. Proben: spritzguss-gefertigt) | | | | | | | | |

Die beiden Anwendungs-Beispiele 1 und 2 zeigen den überraschend hohen Effekt der Steigerung der Haftfestigkeit von galvanisch aufgebrachten Metallüberzügen auf ansonsten dieser Metallbeschichtungs-Technologie praktisch nicht oder nur nach Vorbehandlung mit aggressiven Oberflächen-Aufschluss-Chemikalien zugänglichen Polymerisaten nach deren Modifizierung durch Pfropfung mit den erfindungsgemäß einzusetzenden, neuen Maleinimid-Derivaten.

## Patentansprüche

1. Polymer bzw. Copolymer, welches für eine Beschichtung mit einem stabilen und haftfesten Metall-Überzug durch stromlose und/oder galvanische Abscheidung von mindestens einem Metall vorbereitet und einer solchen zugänglich gemacht ist, bzw. aus dem Polymer bzw. Copolymer durch Thermoplast-Formgebung, gefertigte Gegenstände, Formkörper, Halbzeuge, Profile, Platten, Bleche, Folien, Bänder, Fasern, Granulate od.dgl.,
**dadurch gekennzeichnet,**
- **dass** es bzw. sie mit zumindest einem - einer üblichen stromlosen Metallabscheidung und/oder Galvanisierung an seiner Oberfläche im Wesentlichen nicht oder nur schwierig bzw. unzulänglich zugänglichen Grund-(Co-)Polymerisat aus der Gruppe Polyolefine, Polyalkylene auf Basis von Alkenen mit 2 bis 17 Kohlenstoffatomen, Polyethylene, Polypropylene, Polystyrole, teil-chlorierte/fluorierte Polyalkylene, Polyvinylhalogenide, Poly-C₁-C₁₇-alky)(meth)acrylate, Polyacrylnitrile, Polyethylenterephthalate, Polyacetale, Polycarbonate und Polyamide, gebildet ist bzw. sind, wobei das Grund-(Co-)Polymerisat mit mindestens einem monomeren Maleinimid-Derivat der allgemeinen Formel I 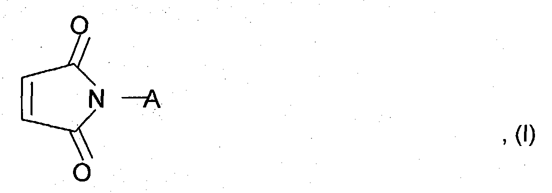 in der A
a) einen Rest der allgemeinen Formel 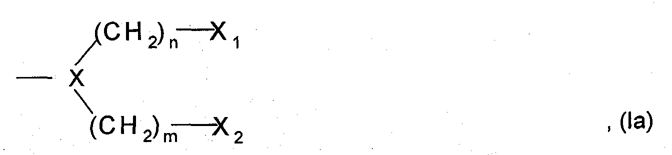 worin X für ≡CH oder ≡N steht,
X₁ und X₂ gleich oder verschieden die Reste -OH, -COOH, -CONH₂, CO-R₂ -CO-(CH₂)ₚ-CO-R₂, -C(=N-OH)-(CH₂)ₚ-C(=N-OH)-R₂ bedeuten,
wobei entweder X₁ oder X₂ auch für -H stehen kann,
R₂ für einen C₁-C₆-Alkylrest oder einen C₆-C₁₂ Arylrest steht und
n, m jeweils unabhängig voneinander für eine Zahl von 0 bis 3 stehen,
b) einen der Reste der allgemeinen Formeln 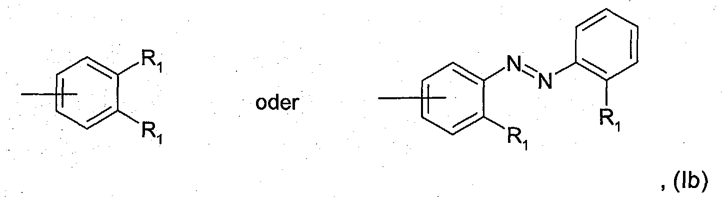 worin R₁ jeweils für eine der Gruppen -H, -OH, -COOH, CONH₂, -NH₂, und/oder -NO₂ steht,
wobei die beiden R₁ untereinander gleich oder verschieden sein können,
c) einen der Reste der allgemeinen Formeln 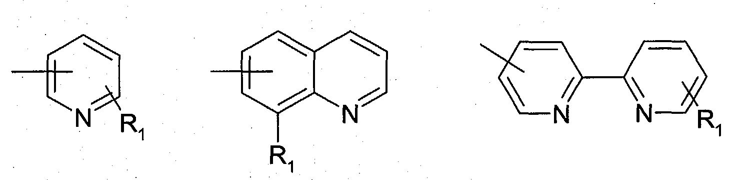 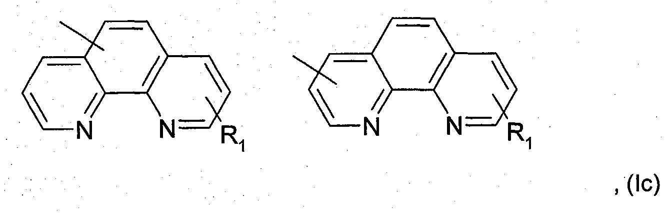 worin R₁ die oben unter b) angegebene Bedeutung hat oder
d) einen Rest der allgemeinen Formel
-S₁-Y-S₂-Z ,(1d)
bedeutet, worin
S₁ und S₂ jeweils unabhängig voneinander für eine einfache Bindung oder für einen C₁-C₁₀-Alkylenrest oder einen C₆-C₁₂-Arylenrest stehen,
Y für -CO-O-, -OCO-, -NH-CO-, -CO-NH-, -NH-CO-O-, -NH-CO-NH-, -OCO-NH- oder -O- steht, und
Z für einen der Reste 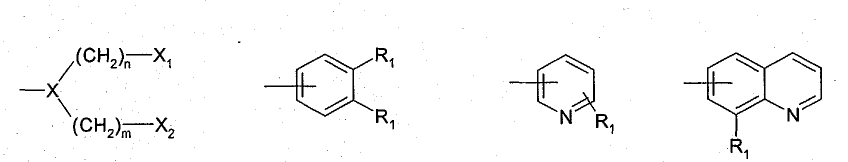 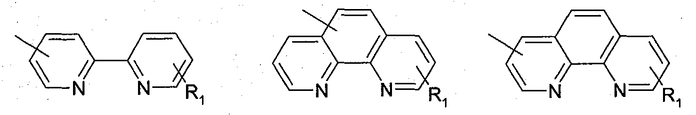
steht, worin
X für 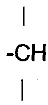 oder 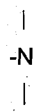 steht und die Reste
X₁ und X₂ sowie n und m die oben unter a) und der Rest
R₁ die oben unter b) angegebenen Bedeutungen haben,
gepfropft ist.

2. Polymer nach Anspruch 1, **dadurch gekennzeichnet, dass** es mit - jeweils bezogen auf 100 Gew-Teile Grundpolymerisat - einen Gehalt von 0,25 bis 4 Gew-Teilen, bevorzugt von 0,5 bis 2 Gew-Teilen, insbesondere 1 Gew-Teil, mindestens eines Maleinimid-Derivats der allgemeinen Formel I gebildet ist.

3. Polymer nach Anspruch 1 oder 2, **dadurch gekennzeichnet, dass** es mit einem der im Anspruch 1 genannten Grund-(Co-)Polymerisate gebildet ist, das mit einem monomeren Maleinimid-Derivat der Formel 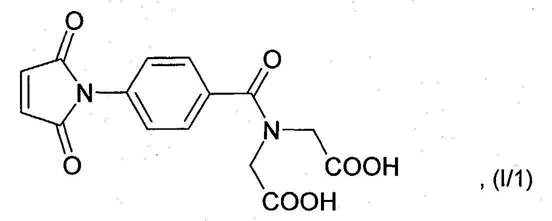 und/oder der Formel 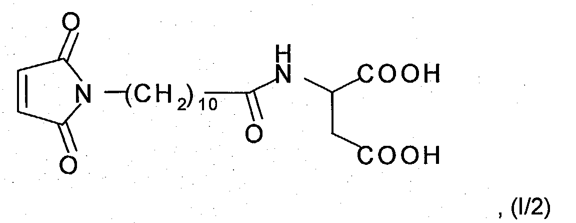 und/oder der Formel 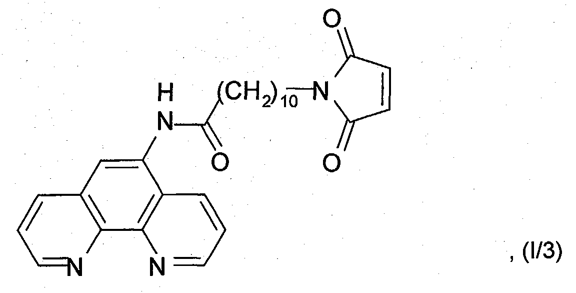 und/oder der Formel 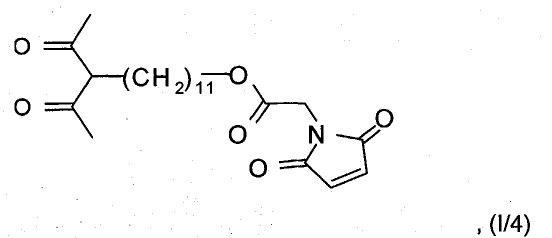 gepfropft ist.

4. Verfahren zur Herstellung von neuen (Co-)Polymeren, welche einer Beschichtung mit einem stabilen und haftfesten Metall-Überzug durch stromlose und/oder galvanische Abscheidung von Metallen zugänglich gemacht ist bzw. von daraus, bevorzugt durch Thermoplast-Formgebung, gefertigten Gegenständen, Formkörpern, Profilen, Folien, Bändern, Fasern od.dgl., **dadurch gekennzeichnet,**
- **dass** ein einer üblichen stromlosen Metallabscheidung und/oder Galvanisierung im wesentlichen nicht oder schwierig bzw. unzulänglich zugängliches Grund-(Co-)Polymerisat aus der Gruppe Polyolefine, Polyalkylene auf Basis von Alkenen mit 2 bis 17 Kohlenstoffatomen, Polyethylene, Polypropylene, Polystyrole, teilchlorierte/fluorierte Polyalkylene, Polyvinylhalogenide, Poly-C₁-C₁₇alkyl(meth)acrylate, Polyacrylnitrile; Polyethylenterephthalate, Polycarbonate und Polyamide einer, vorzugsweise radikalischen, Pfropfung mit mindestens einem monomeren Maleinimid-Derivat der im Anspruch 1 genannten allgemeinen Formel I unterworfen wird.

5. Verfahren nach Anspruch 4, **dadurch gekennzeichnet, dass** als Maleinimid-Derivat mindestens eine der im Anspruch 3 genannten Maleinimid-Verbindungen der Formeln I/1, I/2, I/3 und I/4 eingesetzt wird.

6. Verfahren nach einem der Ansprüche 4 oder 5, **dadurch gekennzeichnet, dass** das jeweilige, für eine übliche galvanotechnische Metall-Beschichtung im wesentlichen ungeeignete Grund- (Co-)Polymerisat mit dem funktionellen Maleinimid-Derivat der allgemeinen Formel I in Gegenwart eines radikalischen Initiators bei Temperaturen im Bereich von 160 bis 240°C, bei Drücken im Bereich von 10 bis 50 bar und bei mittleren Verweilzeiten im Bereich von 30 bis 120 s unter intensivem Vermengen, Mischen, Kneten od.dgl., der genannten Komponenten der Pfropfung unterworfen wird.

7. Verfahren nach einem der Ansprüche 4 bis 6, **dadurch gekennzeichnet, dass** - jeweils pro 100 Gew-Teile Grund-(Co-)Polymerisat - 0,25 bis 4 Gew-Teile, bevorzugt 0,5 bis 2 Gew-Teile, und besonders bevorzugt 1 Gew-Teil Maleinimid-Derivat und 0,1 bis 1,0 Gew-Teile, bevorzugt 0,25 bis 0,8 Gew-Teile, und besonders bevorzugt 0,5 Gew-Teile eines radikalischen Reaktions-Initiators bzw. Radikalstarters, bevorzugt aus der Gruppe der Peroxid- oder Azo-Radikalstarter, eingesetzt werden.

8. Verfahren nach einem der Ansprüche 4 bis 7, **dadurch gekennzeichnet, dass** als Reaktions-Initiator mindestens eine Peroxid- und/oder Azo-Verbindung eingesetzt wird, deren Temperatur der Zehnstunden-Halbwertszeit im Bereich von 60 bis 150°C liegt, wie insbesondere 2,5-Dimethyl-2,5-bis-(tert.-butylperoxy)-hex-(3)-in ("Luperox 130") und/oder Di-tert-butylperoxid.

9. Verfahren zur Herstellung von mit einem Metall haftfest oberflächen-beschichteten Gegenständen, Formkörpern, Halbzeugen, Profilen, Platten, Blechen, Folien, Bändern, Fasern od.dgl., aus einem (Co-)Polymer, wobei eine stromlose dünne Erst-Beschichtung mit einem Metall und danach zumindest eine galvanotechnische Beschichtung mit dem gleichen oder mit einem anderen Metall vorgenommen wird,
**dadurch gekennzeichnet,**
- **dass** ein Gegenstand, Formkörper od.dgl., aus zumindest einem Polymer auf Basis einer der im Anspruch 1 genannten Gruppe von - der Abscheidung eines Metalls nicht oder nur unzulänglich zugänglichen - Grund-Polymerisaten und mindestens eines auf dasselbe pfropf-copolymerisierten, monomeren Maleinimid-Derivats der allgemeinen Formel I bzw. I/1 bis I/4 gemäß einem der Ansprüche 1 bis 3 bzw. ein aus einem gemäß einem der Ansprüche 4 bis 8 hergestellten derartigen gepfropften Polymer, durch Thermoplast-Formgebung, wie Extrusion oder Spritzguss gefertigter, Gegenstand, Formkörper od.dgl.
- ohne jegliche, für eine stromlose Metallabscheidung und/oder Galvanisierung von schwierig zu metallisierenden Polymeren bisher übliche Vorbehandlung der Oberfläche des genannten Gegenstandes, Formkörpers od.dgl. mit dortselbst funktionelle Gruppen schaffenden Chemikalien,
- direkt mit einer eine Metall-(Komplex-)Verbindung, bevorzugt eine Pd-Metall-Komplex-Verbindung, enthaltenden Metallabscheidungs-Aktivierungslösung in Kontakt gebracht wird,
- wonach eine Reduktion zum Metall, bevorzugt zu metallischem Pd, unter dessen Bindung an die Oberfläche des Co-Polymeren erfolgt,
- und der Gegenstand, Formkörper od.dgl. schließlich mittels üblichem Galvanik-Metallabscheidungsprozess mit einer stabilen und haftfesten Überzugsschicht aus einem jeweils gewünschten Metall unterworfen wird.

10. Verwendung eines Polymers bzw. Copolymers gemäß einem der Ansprüche 1 bis 3 bzw. eines gemäß einem der Ansprüche 4 bis 8 mit einem monomeren Maleinimid-Derivat der allgemeinen Formeln I bzw. im Anspruch 3 genannten Formeln I/1 bis I/4 gepfropften Polymers bzw. Copolymers für die Herstellung von durch Thermoplast-Formgebung herstellbaren und mittels stromloser und/oder galvanischer Metallabscheidung mit einem Metallüberzug versehenen Gegenständen, Formkörpern, Halbzeugen, Profilen, Platten, Blechen, Folien, Bändern, Fasern, Granulaten u.dgl.

11. Verwendung von mindestens einem monomeren Maleinimid-Derivat der im Anspruch 1 genannten allgemeinen Formel 1 bzw. der im Anspruch 3 genannten Formeln I/1 bis I/4 zur Herstellung von Gegenständen, Formkörpern od.dgl. aus ursprünglich nicht oder nur unzulänglich metallisierbaren Polymeren bzw. Copolymeren, welche einer stromlosen und/oder galvanischen Metallabscheidung auf ihrer Oberfläche zugänglich gemacht sind, mit der Maßgabe, dass das genannte Maleinimid-Derivat auf das ursprünglich nicht oder nur unzulänglich metallisierbare Polymere bzw. Copolymere gepfropft ist.
